# EUROPEAN PATENT APPLICATION

(11) **EP 1 810 893 A1**
(43) Date of publication of application: **25.07.2007**
(21) Application number: 06100399.2
(22) Date of filing: 16.01.2006
(51) Int. Cl.: B60R 21/34, B62D 25/14

(54) **Vehicle front interior structure**

(71) Applicant: Ford Global Technologies, LLC, Dearborn, MI 48126 (US)
(72) Inventor: Jonsson, Tony, SE-441 91, Alingsås (SE); Erlingfors, Mats, SE-444 65, Jörlanda (SE); Fredriksson, Anders, SE-414 67, Göteborg (SE)
(74) Representative: Ekström, Nils

(57) **Abstract**

The invention concerns a vehicle front interior structure (1), comprising a dashboard member (18, 18', 18") being directly or indirectly secured to a vehicle body (10, 16). The invention is characterized in that the dashboard member (18, 18', 18") is adapted to detach from the vehicle body (16) when the dashboard member (18, 18', 18") is exposed to a force exceeding a predetermined limit.

## Description

### TECHNICAL FIELD

This invention relates to impact energy absorbance properties of a vehicle front interior structure, in particular in the event of a collision with a pedestrian.

### BACKGROUND ART

Vehicles have for many years been designed to protect the occupants of the vehicle. Another important aspect in the design of vehicles is to prevent, or at least reduce, injuries of pedestrians in the event of a collision. Most of the disclosed designs focus on the front end or hood (bonnet) structure of the vehicle. An important aspect in this context is to reduce the impact to the head of a pedestrian. In a collision with an adult pedestrian the head of the pedestrian is likely to hit the vehicle somewhere at the hood or the windshield (windscreen). Whereas both the hood and the windshield are relatively flexible and therefore can absorb a great deal of the impact energy, the interface between the hood and the windshield generally is a rigid zone which therefore may cause severe injuries if hit. The rigidity of this zone is due to the front interior structure located below the lower part of the windshield.

A front interior structure of a motor vehicle includes a plurality of components that may be more or less integrated into each other and wherein the individual components may be known under different names. Examples of components in conventional front interior structures are dashboard, instrument panel, airbags, steering column supports, air flow/ventilation ducts, windshield support, HVAC unit (heating, ventilating and air conditioning unit), various instruments and electronic devices, as well as various brackets and fasteners. Normally, an instrument panel beam (cross member) extends transversely below the windshield between the front pillars (A-pillars) of an automotive body as to provide support to the windshield and the dashboard etc., as well as to provide structural rigidity and support to the vehicle. Examples of vehicle interior front structures are given in e.g. US6520849, US6447041 and US5678877.

A few proposals on how to make this rigid hood/windshield zone more "pedestrian-friendly" have been presented in the past. JP2004034832 discloses a vertically movable component of an external air introduction duct stated to mitigate injuries of pedestrian in the event of an accident as well as to simplify production. US6193304 and US6193305 both disclose a windshield support structure having a bend portion with a V-shaped cross-section that absorbs energy by bending at impact. However, there is still a need for improvements in this field.

### DISCLOSURE OF INVENTION

The object of this invention is to provide a vehicle front interior structure that exhibit improved impact energy absorbance properties compared to conventional structures, in particular in the event of a collision with a pedestrian. This object is achieved by the technical features contained in claim 1. The dependent claims contain advantageous embodiments, further developments and variants of the invention.

The invention concerns a vehicle front interior structure, comprising a dashboard member being directly or indirectly secured to a vehicle body. The invention is characterized in that the dashboard member is adapted to detach from the vehicle body when the dashboard member is exposed to a force exceeding a pre-determined limit. An advantageous effect of this design is that the stiffness of the structure is reduced since the dashboard member will yield to the impact of an object, such as a head of a pedestrian, which in turn will increase the braking distance and thereby slow down the deceleration of the object. This will in turn reduce the injuries in a collision with a pedestrian.

In a first advantageous embodiment of the invention the dashboard member is secured to the vehicle body using fastening means comprising a fastening member, attached to the dashboard member, and a bracket, attached to the vehicle body, wherein the fastening means comprises a breakable member adapted to collapse when exposed to a force exceeding a pre-determined limit. Preferably, the pre-determined limit of the force is in the range 0,5-1,5 kN, Such a design works well and is relatively simple.

In a second advantageous embodiment of the invention the vehicle front interior structure comprises a windshield support member adapted to absorb impact energy in the event of a collision with e.g. a pedestrian. This way all impact energy does not necessarily have to be absorbed by the dashboard member which in turn simplifies the design of the interior structure. Preferably, the windshield support member comprises a curved flange adapted to support a lower part of a windshield and to be deformed in a roll-bending manner when exposed to an impact. Such a curved flange is capable of absorbing impact energy in a very efficient manner.

In a third advantageous embodiment of the invention the vehicle front interior structure comprises an air flow distribution duct arranged essentially parallel with the windshield, wherein the distribution duct is divided into at least two sections connected by a flexible joint that extends in a direction essentially across the distribution duct. An advantageous effect of this design is that the stiffness of the structure is reduced since the air flow distribution duct will yield around the joint to the impact of an object, such as a head of a pedestrian, which in turn will slow down the deceleration of the object. This will in turn reduce the injuries in a collision with a pedestrian.

In a fourth advantageous embodiment of the invention the vehicle front interior structure comprises an air flow main duct arranged to lead air upwards from an HVAC-unit, wherein the main duct is at least partly formed in a flexible material, such as a thermo plastic elastomer. This makes the main duct flexible in a direction important for slowing down the deceleration of an impacting object, such as a head of a pedestrian. Preferably, the HVAC-unit is arranged below the main duct wherein a connection surface between the main duct and the HVAC-unit is inclined in a rear direction. An advantageous effect of this feature is that the main duct can disconnect from the HVAC-unit in order to further increase the braking distance of an impacting object.

In a fifth advantageous embodiment of the invention a front portion of a dashboard member positioned in connection with the windshield is arranged to be considerable weaker than the main parts of the remaining portion of the dashboard member. Thereby it is possible to dispense with rigid material in this position which allows impact absorbing parts of the vehicle front interior structure to work efficiently.

### BRIEF DESCRIPTION OF DRAWINGS

In the description of the invention given below reference is made to the following figures, in which:
- Figure 1: shows, in an exploded perspective view, a preferred embodiment of the vehicle front interior structure according to the invention,
- Figure 2: shows the embodiment of the invention according to figure 1 in an assembled mode,
- Figure 3: shows a first detail of the preferred embodiment of the invention,
- Figure 4: shows a second detail of the preferred embodiment of the invention,
- Figure 5: shows a third detail of the preferred embodiment of the invention, and
- Fig. 6a-6e: shows, in a schematic side view, the function of the inventive vehicle front interior structure during a collision.

### EMBODIMENTS OF THE INVENTION

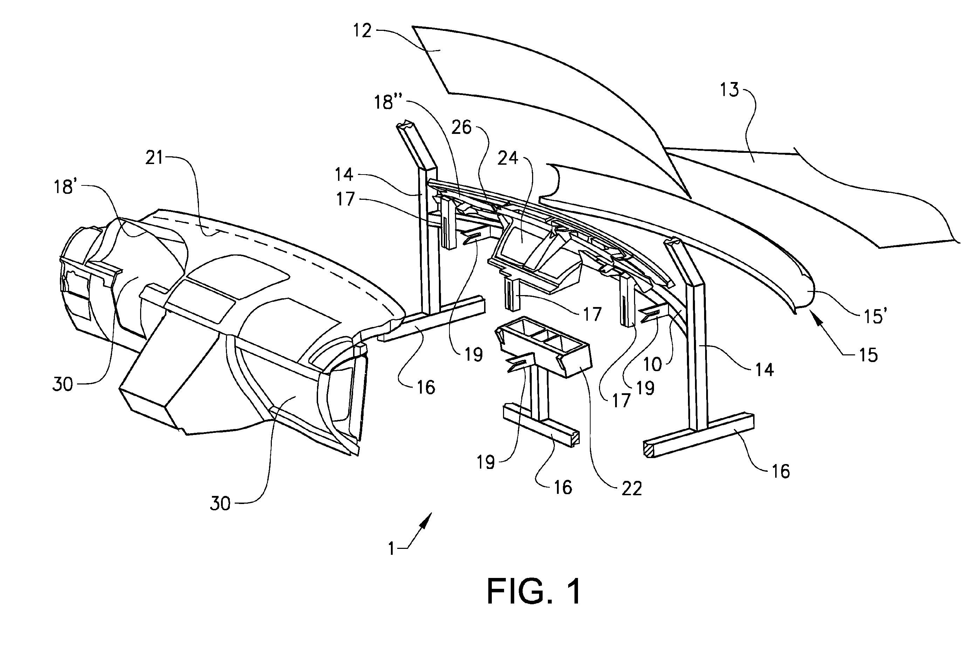

Figure 1 schematically shows in an exploded perspective view a vehicle front interior structure 1 according to a preferred embodiment of the invention. A cross member 10 extends transversely at some distance below a windshield 12 between the A-pillars 14 of a schematically shown vehicle body 16. The cross member 10 provides structural rigidity and support to the vehicle and it also supports a windshield supporting member 15 comprising a curved flange 15'. A hood 13 is also shown in figure 1. The front interior structure 1 further comprises a first, outer, dashboard member 18'; a second dashboard member 18" forming main air flow ducts 24 and air flow distribution ducts 26; and a heating, ventilating and air conditioning unit (HVAC-unit) 22. The HVAC-unit 22 is principally a solid box containing air treatment equipment. The main ducts 24 lead the treated (e.g. heated) air from the HVAC-unit 22 in a diagonal forward/upwards direction to the distribution ducts 26 arranged in parallel with the windshield 12, which distribution ducts 26 guide the air flow to outlets directed towards the windshield 12 and towards side windows. The first and second dashboard members 18', 18" are actually welded together as to form one integral dashboard unit 18 wherein the distribution ducts 26 are formed when the two members 18', 18" are assembled. The integral dashboard member 18 is provided with fastening members 17 adapted to be fastened to brackets 19 arranged on the vehicle body 16. As will be described further below, the fastening members 17 and brackets 19 exhibit a detachment function such that the dashboard member 18 becomes detachably secured to the vehicle body 16.

The vehicle front interior structure 1 may of course also be provided with various other parts, such as instruments, steering column, glove compartment and airbags, which are not shown in the figures. Openings 30 allow space for some of such parts.

The outer dashboard member 18' is, in a conventional manner, made up of a carrier covered with foam and an outer surface layer, wherein the carrier gives the dashboard member 18' a structural rigidity. However, a front portion 21 of the outer dashboard member 18', i.e. the part of the outer dashboard member 18' that is positioned in association with a lower part of the windshield 12, has been made much weaker than the rest of the outer dashboard member 18' by modifying the carrier in this front portion 21. The main function of this weakened front portion 21 is to significantly increase the flexibility of the dashboard in the position close to the windshield 12 so that the curved flange 15' is allowed to absorb impact energy in an efficient manner as is further described below. The dashboard front portion 21 should principally be as weak as possible in order to make it possible to dispense with any rigid parts in the position close to the windshield 12, since such parts might interfere with the function of the curved flange 15'. It is sufficient if the front portion 21 has a self-supporting strength. In the example described here the weaker front portion 21 is made of a thermo plastic elastomer and constitutes the front 60 mm portion of the outer dashboard member 18'. Due to this feature, the front portion will easily yield but also slightly contribute to the absorption of impact energy in the event of a collision. The weakened front portion 21 of the outer dashboard member 18' is hold in place at the lower part of the windshield 12 by means of a flexible sealing member (not shown) that extends horizontally along the windshield 12 and that has a clips function that is adapted to detach rather easily at an impact.

The integral dashboard member 18, and thus the second dashboard member 18", is positioned such that the main ducts 24 becomes positioned on top of the HVAC-unit 22 that thus forms a duct support. The HVAC-unit 22 is inclined in a direction towards the rear of the vehicle such that the main ducts 24, and thus the dashboard members 18', 18", more easily can slide off the HVAC-unit 22 in the event of a collision.

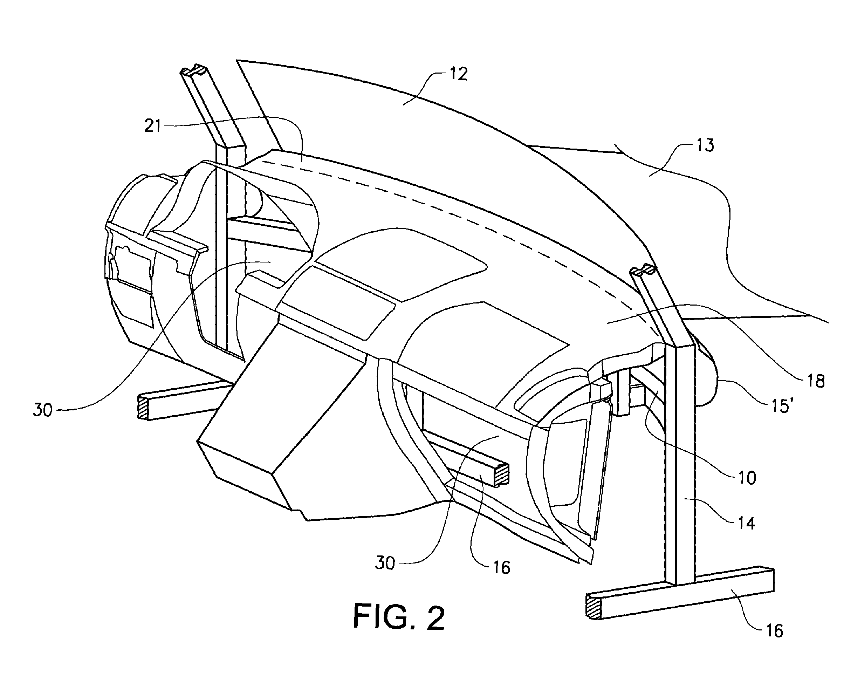

Figure 2 shows the vehicle front interior structure 1 in an assembled mode.

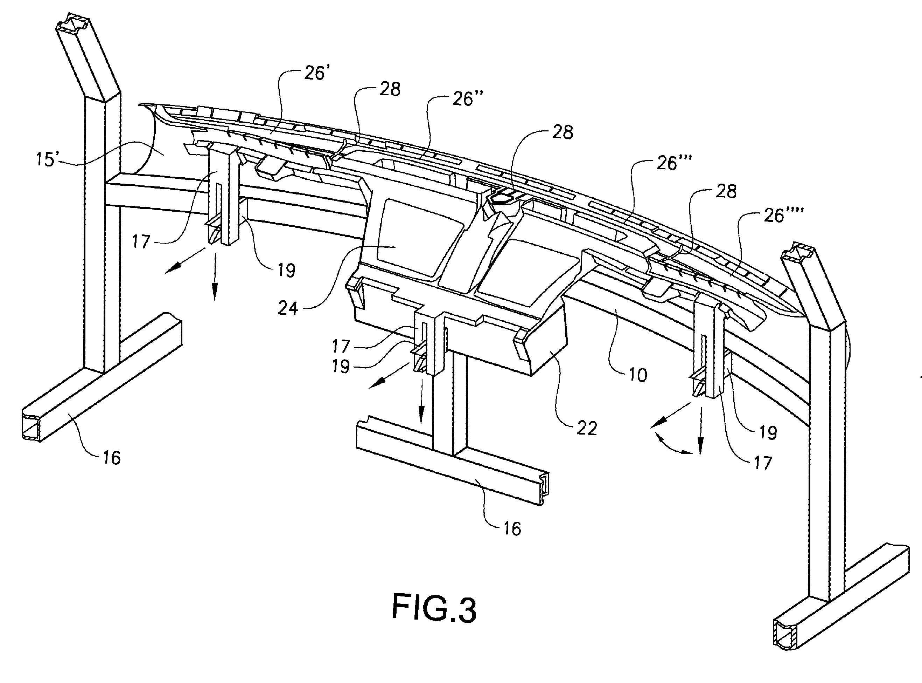

In figure 3 the outer dashboard member 18', as well as the windshield 12 and the hood 13, have been removed in order to show the second dashboard member 18" and the attachment of the dashboard to the cross member 10 and other parts of the vehicle body 16. With regard to reduction of pedestrian injuries, it is important that the distribution ducts 26 are capable of yielding when exposed to a force directed perpendicular to the windshield 12. Since the distribution ducts 26 are arranged essentially in parallel with the windshield 12, the distribution ducts 26 should thus be capable of yielding in a direction perpendicular to their longitudinal axis. As can be seen in figure 3, the distribution ducts 26 are divided into four sections 26', 26", 26"', 26"" separated by flexible joints 28 that extend in a direction across the distribution ducts 26. In this case the flexible joints 28 are, in principle, produced by cutting off the distribution duct 26, normally made in ABS plastic, and re-joining the sections with a thermo plastic elastomer (TPE) with low stiffness. Preferably, the flexible joints 28 are moulded together with the duct sections 26', 26", 26"', 26"". Conventionally, the distribution ducts 26 form a rigid transversal beam section, but by splitting them up into several parts they become flexible such that they yield in the event of a collision impact. As an alternative to the use of TPE, the flexible joints 28 could be achieved by giving the end parts of the duct sections 26', 26", 26"', 26"" a bellows design or a telescopic function.

The fastening means, i.e. the fastening member 17 and the bracket 19, are adapted to detach when the second dashboard member 18" is exposed to a force exceeding a certain pre-determined limit. In most situations the force of interest is the resulting force directed diagonally backwards/downwards as indicated by the arrows. Conventional dashboards are rigid and firmly attached to the vehicle body. The main function of the inventive detaching function of the dashboard member 18 is to extend the braking distance of a pedestrian that hits the windshield 12 and the dashboard positioned behind/below. What will happen in the event of such a collision is that, until the force reaches the pre-determined limit, part of the impact energy will be absorbed by the dashboard members 18', 18" due to inherent resilience. As the force reaches the pre-determined limit, one or several of the fastening means 17, 19 will detach; they do not necessarily have to detach simultaneously. Between the instants of time when the detachments occur, and also after the last fastening means 17, 19 has detached, further impact energy will be absorbed by the dashboard members 18', 18" due to inherent resilience. Which value to choose for this pre-determined limit depends on the over-all design of the interior structure 1, such as if there are other collapsable/detachable systems present and in which way different systems or functions co-operate. Generally, if the pre-determined limit is too low the dashboard might detach unintentionally, i.e. the dashboard may come loose in non-accidental situations, and if the pre-determined limit is too high the structure will not absorb impact energy in the intended manner. Around 0,5 kN may be regarded as a lower limit. In the example described in this text the pre-determined limit at which the dashboard member comes loose is set to 0,8 kN. A value in the interval 0,6 - 1,0 kN would be reasonable. A value of around 1,5 kN may be regarded as an upper limit. The force at which the individual brackets 19 or fastening members 17 should be designed to detach or collapse depends on the total number of brackets and how they are positioned.

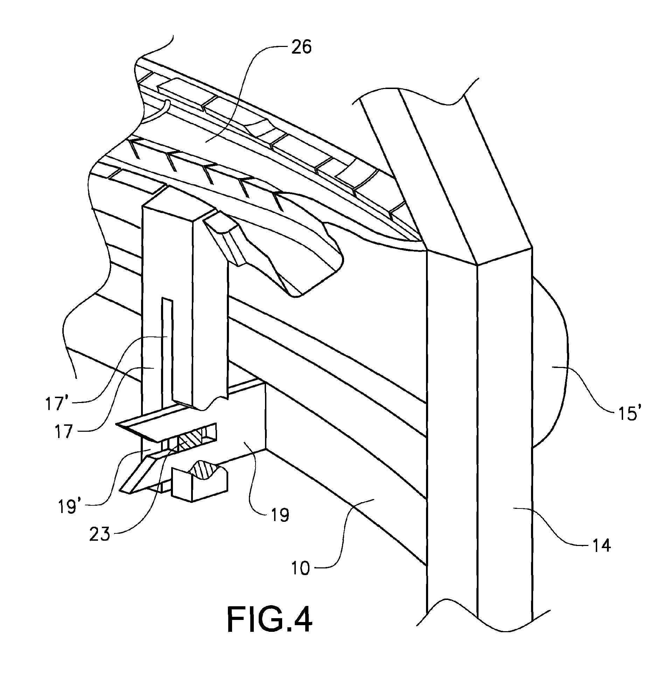

Figure 4 shows, in an enlarged sectional perspective view, the fastening means 17, 19 used for attaching the dashboard member 18 to the cross member 10 that forms a part of the vehicle body 16. The brackets 19 are made of steel and are firmly attached to the cross member 10 or other parts of the vehicle body 16. Each bracket 19 constitutes of a vertically positioned plate extending in a backward direction, in relation to the vehicle, and is provided with a longitudinal recess 19' that is open in the rear and side directions. The fastening members 17 are made of plastics and each fastening member 17 is provided with a vertical recess 17' having a width adapted to receive the bracket 19, and a breakable member 23, adapted to fit into the longitudinal recess 19'. The breakable member 23 is adapted to collapse when the dashboard member 18 is exposed to a downwardly directed force exceeding a certain pre-determined value. The vertical recess 17' extends in an upward direction to allow the dashboard member 18 to move downwards when the breakable member 23 collapses. The dashboard member 18 is easily arranged onto the brackets 19 by pushing it in a forward direction after having adjusted its vertical position. The brackets 19 are designed to guide the breakable member 23 into the longitudinal recess 19'. Various other, easily detachable fastening means (not shown), such as screws, holds the dashboard member 18 in place so that it does not slide backwards. Naturally, it is possible to use other materials than steel and plastics for the bracket 19 and the fastening member 17. In particular, various deformable material could be used to form the breakable member 23.

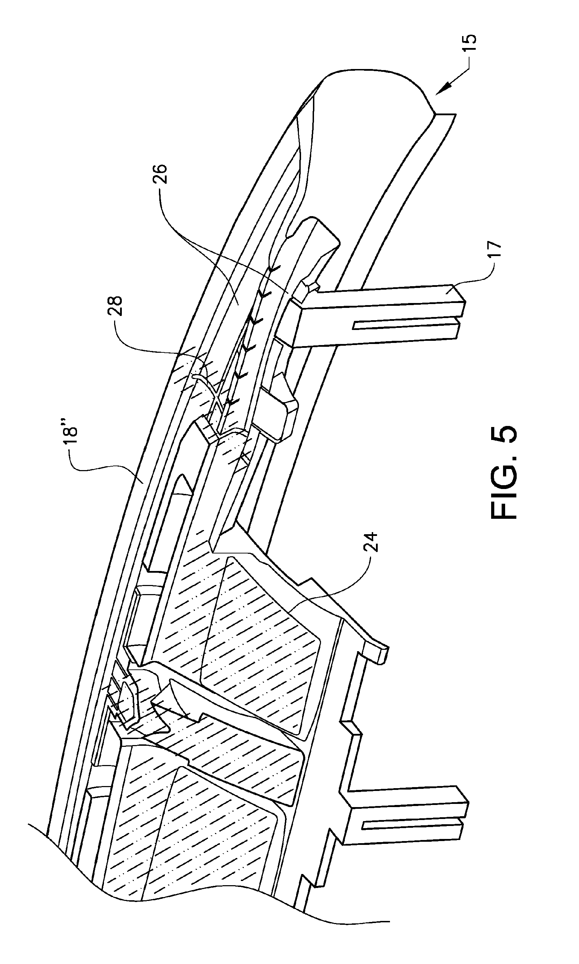

Figure 5 shows a magnified view of a part of the second dashboard member 18", as well as of the windshield supporting member 15. Conventionally, a dashboard member constituting air flow ducts is made of ABS plastics which is a good structural material, is relatively inexpensive and is weldable. Such a rigid conventional dashboard is, however, not suitable for absorbing impact energy. With regard to reduction of pedestrian injuries, it is important that the main ducts 24 are capable of yielding when exposed to a force directed perpendicular to the windshield 12. Since the main ducts 24 are arranged essentially perpendicular to the plane of the windshield 12, the main ducts 24 should thus be capable of yielding in a direction along with their longitudinal axis. In contrast to a conventional dashboard, a significant portion of the inventive second dashboard member 18" is therefore made out of a thermo plastic elastomer (TPE) which reduces the stiffness of the structure allowing further absorbtion of impact energy in the event of a collision. Parts made of TPE are indicated by slanted, stepped, line areas in figure 5. In particular, the portions of the second dashboard member 18" forming the main ducts 24 are made of TPE. Figure 5 also shows the TPE in one of the flexible joints 28 that divides the distribution ducts 26. As can be seen in figure 5 some parts are made of ABS to allow welding together with other parts of the dashboard.

As an alternative, or complement, to the use of TPE the main ducts 24 may have a bellows or telescopic design which also reduces the stiffness of the structure. As will be further described below, the lower support of the main ducts 24 has a disconnection function achieved by a detach function and/or a geometry that allows movement of the main duct 24 such as an appropriate inclination of contact surface.

The front interior structure 1 may further be provided with load distributors (not shown) in the form of one or several relatively thin and flat plates positioned in front of the windshield supporting member 15 below, and in the same plane as, the windshield 12. The load distributors are adapted to transmit loads to the windshield and further to a roof structure in the event of a vehicle front crash. Since the load distributors have a flat form and are positioned in the same plane as the windshield 12 they will, in the event of a pedestrian head impact, easily bend or collapse with a minimum of force contribution in head impact direction.

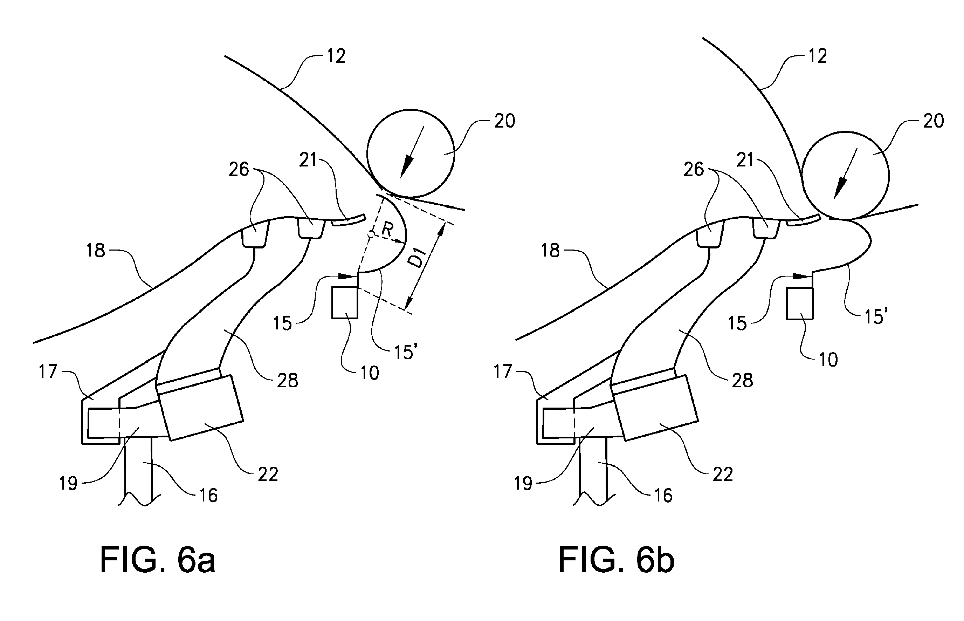

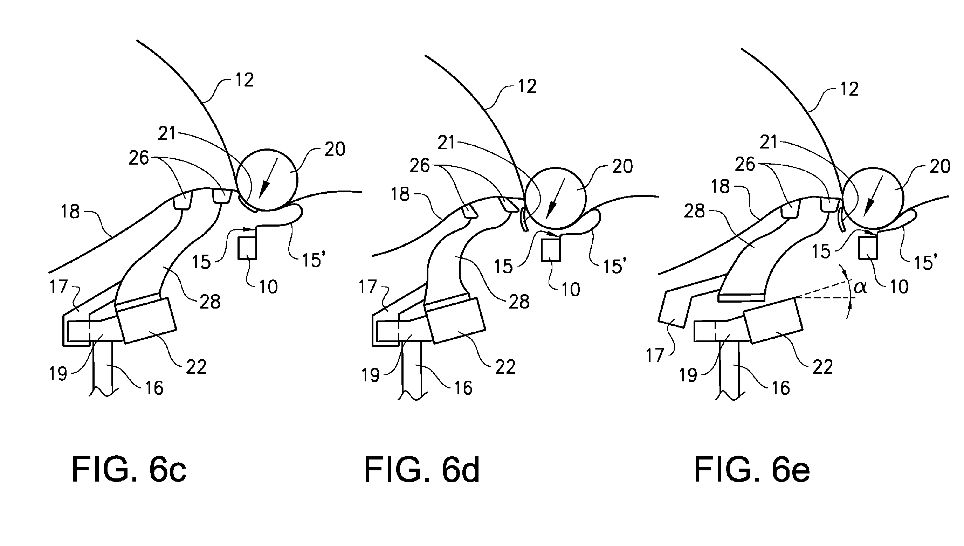

Figures 6a-6e show a schematic cross sectional view of the inventive vehicle front interior structure 1 during impact of an object 20, such as a head of pedestrian. The figures 6a-6e are in chronological order such that in figure 6a the impact starts whereas in figure 6e the velocity of the object 20 is zero relative to the vehicle. As shown in figure 6a the cross member 10 is positioned at a distance D1 from the windshield 12 and the windshield-hood interface. As the cross member 10 is a rigid supporting member the distance D1 determines the total depth of the deformation zone. The distance D1 should be at least around 50 mm but a preferred value is around 110 mm.
Figure 6a also shows the windshield supporting member 15 having a curved, C-shaped flange 15' that is positioned between the cross member 10 and the windshield 12. The windshield supporting member 15 is constituted of a substantially straight lower flange member, that is fastened to the cross member 10, and a curved flange member 15' with a radius of 55 mm. The convex side of the C-shaped flange 15' is faced towards the front of the vehicle, whereas the concave side is facing the rear of the vehicle. The windshield supporting member 15 is attached to the cross member 10 essentially along its entire length. The C-shaped flange 15' is produced from a steel sheet with a thickness of 0,7 mm. In the example described here the whole windshield supporting member 15 is made from the same steel sheet. In order to adapt the windshield supporting member 15 to e.g. different vehicle interior structures it is possible to vary e.g. the steel plate thickness, within an interval of around 0,5-1,5 mm, and to modify the curvature of the flange 15'. In this regard it is important that the flexibility of the curved flange 15' is adapted to an impact corresponding to a head of a pedestrian in the event of a collision and that the curved flange 15' is adapted to be deformed in a roll-bending behaviour as further described below.

Figure 6b shows the situation slightly after impact of the object 20 at the lower part of the windshield 12. As shown in figure 6b the windshield supporting member 15 has started to deform. Due to its curved cross section the flange 15' exhibits an almost constant deformation force, i.e. the force acting as to avoid further deformation. During impact the deformation of the flange 15' follows the object, i.e. the flange 15' exhibits a roll bending behaviour such that the plastic deformation zone moves continuously along the flange. In contrast to a e.g. a V-shaped flange, that exhibits a force-deformation curve where, after an initial peak, the force decreases with increasing deformation, the inventive curved flange 15' exhibits a force-deformation curve where, after an initial increase, the force is essentially independent of the deformation. The inventive curved flange 15' can thus absorb a larger amount of impact energy compared to a V-shaped flange of similar dimensions. In addition to the C-shape, the windshield supporting member 15 is slightly bent in a z-direction, i.e. in a direction parallel to the cross member 10, which enhances the tendency of exhibiting a flat force-deformation curve and which also has the effect of giving a more local deformation. In order to achieve the advantageous roll-bending effect it is important to avoid a too small radius of the curved flange member. In particular, it is important to avoid a bending indication such as a V-shape. A preferred interval of the radius is between 25 and 100 mm.

In figure 6c the windshield supporting member 15 has been further deformed and the weakened front portion 21 of the dashboard member 18 has started to deform. So far, the impact energy of the object has been absorbed by the windshield 12, the hood 13, the C-shaped flange 15' and the weakened dashboard front portion 21.

In figure 6d the windshield supporting member 15, as well as the weakened dashboard front portion 21, have been further deformed. At this moment also the ducts 24, 26 have started to contribute to the impact energy absorption; the distribution ducts 26 have yielded at one or several of the flexible joints 28 whereas the main ducts 24 have started to deform due to their content of flexible material.

In figure 6e the fastening means 17, 19 has disengaged or collapsed such that the dashboard member 18 has detached from the vehicle body 16 (including the cross member 10). Further, the duct support has been disconnected from the HVAC-unit 22 due to the inclination of the connecting surface. In figure 6e an angle α of inclination is indicated. A preferred value of this angle α for achieving a proper disconnecting function is around 20-60°.

In the front interior structure described, any supports and fixations of the front part of the dashboard, i.e. up to around 300 mm from the dashboard front edge, are detachable or deformable, i.e. when a certain force level is exceeded the support or fixation collapse or detach so that the dashboard member comes loose from the vehicle body 16. This means that the support stiffness is considerably reduced. This function is obtained both for the dashboard itself and any system integrated into the dashboard.

A commonly used parameter in designing vehicles to be less hazardous to pedestrians is the so-called HIC (Head Injury Criteria) level which is a measure of the absorbed energy of a head of a pedestrian in the event of an accident. In principal, the HIC level is calculated from the time dependency of the retardation of the head. The lower the level of the HIC, the lower the risk of having injuries. Conventional vehicle front interior structures typically give an HIC-level of at least 2000 which results in a serious injury. To reduce serious injury in the plenum area the HIC value has to be reduced to a value below around 1000. A main reason for the high-level HIC associated with the conventional structures is that that the supporting cross member in these structures is positioned directly below the windshield thus working as a direct windshield support. Such a structure provides no deformation zone that can absorb the impact energy. In contrast, the inventive vehicle front interior structure 1 provides several different structural improvements that contribute to the absorption of the impact energy: the roll-bending behaviour of the curved windshield supporting flange 15'; the collapsable or detachable supporting 17, 19 of the dashboard 18; and the flexibility of the duct systems 24, 26 and their support. In principal, these structural details can be applied individually depending on the overall design of a particular vehicle front interior structure. However, by combining some or all of these structural details the total impact energy to be absorbed may be divided between the details making it easier to find a proper design solution for each detail. As a general rule the total force the energy absorbing parts should be designed for is about 3 kN. A general advantage of the inventive front interior structure 1 is that it does not rely on complicated and usually rather expensive active components such as airbags, but instead rely on relatively simple and inexpensive components that form a passive safety system.

In this context the expression "dashboard member" refers to a main part of a dashboard arrangement positioned below the windshield 12 in a vehicle. In the example described here, the dashboard arrangement comprises two main parts: the first dashboard member 18', which is the outer, visible part of the dashboard arrangement and which sometimes is referred to as an instrument panel; and the second dashboard member 18", which defines the major part of the ducts 24, 26 and which sometimes is referred to as a base member or a dashboard carrier. These two main parts extend between the A-pillars 14, are attached to the vehicle body 16 via the cross member 10, and are, in this particular example, joined together as to form one integral dashboard member 18. Smaller dashboard components, such as instruments and airbags, are in turn attached to these main parts. In alternative dashboard arrangements the two dashboard members 18', 18" may be less integrated; the ducts 24, 26 may e.g. be defined only by the second dashboard member 18" and the two dashboard members 18', 18" may be attached to the vehicle body 14 in a more independent way than in the example described here. Further, a main dashboard member, in particular the second, concealed dashboard member 18", may be constituted of several main parts that may be individually fastened to the vehicle body 16. Any part of the dashboard arrangement that is relevant in the context of reducing injuries in collisions with pedestrians may be regarded as a "dashboard member". For instance, the dashboard arrangement may comprise an upper dashboard member positioned horizontally at the lower part of the windshield. This upper dashboard member could be detachably attached to the vehicle body and thus be regarded as the "dashboard member". In order to realize the detachable function of the dashboard member as described above it is sufficient that one of the main parts of the dashboard arrangement is detachably arranged. However, in order to make use of the advantages associated with this function it is important that other parts of the dashboard arrangement do not destroy the advantages provided by the detachable part. Therefore, these other parts should either be detachable themselves, be arranged onto the detachable part, or have a very flexible structure. The detachable dashboard member(s) can be directly or indirectly secured to the vehicle body. In the preferred embodiment of the invention shown in the figures the main, integral dashboard member 18 may be regarded as directly secured to the vehicle body 16 since only some fastening means 17, 19 are involved. As an alternative, it is possible to attach a main dashboard member to an additional dashboard member that in turn is detachably arranged onto the vehicle body. Such an additional dashboard member may be regarded as a main part of the dashboard arrangement and, thus, as the detachable "dashboard member".

With the expression that the windshield support member 15 is adapted to absorb impact energy is meant that the windshield support member 15 is flexible such as to allow a deformation zone to be formed in the event of an impact of e.g. a head of a pedestrian. This means, for instance, that any rigid cross member adapted to give stability to the vehicle, which cross member due to its stabilizing function would not contribute to the deformation zone in the event of an impact of a head, must be positioned at some distance from the windshield.

The invention is not limited by the embodiments described above but can be modified in various ways within the scope of the claims. For instance, it is not necessary that the various impact energy absorbing parts are activated in the same order as described in relation to figures 6a-6e.

Further, the windshield supporting member 15 can be designed and arranged in various ways but it is important to include a curved flange adapted to be deformed in a roll-bending manner when exposed to an impact as described above.

As an alternative to the breakable/collapsable function of the fastening means 17, 19 it is possible to use other detachable functions, such as a clips function.

It should be noted that wording such as "detach" and "detachable function" refer both to detachable/attachable structures and structures that collapse, i.e. that become destructed when detached.

## Claims

1. Vehicle front interior structure (1), comprising a dashboard member (18, 18', 18") being directly or indirectly secured to a vehicle body (10, 16),
**characterized in**
**that** the dashboard member (18, 18', 18") is adapted to detach from the vehicle body (16) when the dashboard member (18, 18', 18") is exposed to a force exceeding a pre-determined limit.

2. Vehicle front interior structure (1) according to claim 1,
**characterized in**
**that** the dashboard member (18, 18', 18") is secured to the vehicle body (10, 16) using fastening means (17, 19) comprising a fastening member (17), attached to the dashboard member (18, 18', 18"), and a bracket (19), attached to the vehicle body (10, 16), wherein the fastening means (17, 19) comprises a breakable member (23) adapted to collapse when exposed to a force exceeding a pre-determined limit.

3. Vehicle front interior structure (1) according to claim 1 or 2,
**characterized in**
**that** the pre-determined limit of the force is in the range 0,5-1,5 kN,

4. Vehicle front interior structure (1) according to anyone of the above claims,
**characterized in**
**that** it comprises a windshield support member (15) adapted to absorb impact energy in the event of a collision with e.g. a pedestrian.

5. Vehicle front interior structure (1) according to claim 4,
**characterized in**
**that** the windshield support member (15) comprises a curved flange (15') adapted to support a lower part of a windshield (12) and to be deformed in a roll-bending manner when exposed to an impact.

6. Vehicle front interior structure (1) according to claim 5,
**characterized in**
**that** the curved flange (15') extends along a lower part of the windshield (12).

7. Vehicle front interior structure (1) according to claim 5 or 6,
**characterized in**
**that** the curved flange (15') has a radius (R) between 25 and 100 mm.

8. Vehicle front interior structure (1) according to claim 7,
**characterized in**
**that** the curved flange (15') has a radius (R) between 50 and 60 mm.

9. Vehicle front interior structure (1) according to anyone of claims 5 to 8,
**characterized in**
**that** the curved flange (15') has a convex side directed in a forward direction.

10. Vehicle front interior structure (1) according to anyone of claims 4 to 9,
**characterized in**
**that** the windshield support member (15) is attached to a supporting cross member (10).

11. Vehicle front interior structure (1) according to claim 10,
**characterized in**
**that** the supporting cross member (10) is positioned at least 50 mm, preferably at least 75 mm, more preferably at least 100 mm, from the windshield (12).

12. Vehicle front interior structure (1) according to anyone of the above claims,
**characterized in**
**that** it comprises an air flow distribution duct (26) arranged essentially parallel with a windshield (12), wherein the distribution duct (26) is divided into at least two sections (26', 26", 26"', 26"") connected by a flexible joint (28) that extends in a direction essentially across the distribution duct (26).

13. Vehicle front interior structure (1) according to claim 12,
**characterized in**
**that** the flexible joint (28) comprises a flexible material, such as a thermo plastic elastomer, arranged to connect adjacent distribution duct sections (26', 26", 26"', 26"").

14. Vehicle front interior structure (1) according to claim 12 or 13,
**characterized in**
**that** the air flow distribution duct (26) is integrated into a dashboard member (18, 18', 18").

15. Vehicle front interior structure (1) according to anyone of the above claims,
**characterized in**
**that** it comprises an air flow main duct (24) arranged to lead air upwards from an HVAC-unit (22), wherein the main duct (24) is at least partly formed in a flexible material, such as a thermo plastic elastomer.

16. Vehicle front interior structure (1) according to claim 15,
**characterized in**
**that** the HVAC-unit (22) is arranged below the main duct (24) wherein a connection surface between the main duct (24) and the HVAC-unit (22) is inclined in a rear direction.

17. Vehicle front interior structure (1) according to anyone of the above claims,
**characterized in**
**that** a front portion (21) of the dashboard member (18, 18', 18") positioned in connection with a windshield (12) is arranged to be considerable weaker than the main parts of the remaining portion of the dashboard member (18, 18', 18")
